# EUROPEAN PATENT APPLICATION

(11) **EP 4 079 387 A1**
(43) Date of publication of application: **26.10.2022**
(21) Application number: 20909959.7
(22) Date of filing: 23.11.2020
(51) Int. Cl.: B01D 3/30, B01D 3/32

(54) **DISTILLATION APPARATUS AND DISTILLATION METHOD**

(30) Priority: 30.12.2019 KR 20190177387
(71) Applicant: Hanwha Solutions Corporation, Jung-gu Seoul 04541 (KR)
(72) Inventor: LIM, Dongwook, Daejeon 34128 (KR); LEE, Shinbeom, Daejeon 34128 (KR); SONG, Junhye, Daejeon 34128 (KR); AHAN, Wooyoul, Daejeon 34128 (KR); JEON, Hyojin, Daejeon 34128 (KR); HAN, Keedo, Daejeon 34128 (KR)
(74) Representative: Thoma, Michael
(86) International application number: PCT/KR2020/016575
(87) International publication number: WO 2021/137434

(57) **Abstract**

Provided is a distillation apparatus, including: a body part into which a distillation target material is introduced from an upper portion and gas is introduced from a lower portion; a rotating shaft rotating inside the body part; a plurality of rotation cones provided on an outer surface of the rotation shaft; and a plurality of fixed cones provided on an inner surface of the body part and spaced apart from each of the rotation cones by a predetermined distance, in which, when a distance between each of the plurality of fixed cones is H1, and a shorter distance of a distance from a bottom surface of the body part to a lower surface of the rotation cone closest to the bottom surface of the body part and a distance from the bottom surface of the body part to a lower surface of the fixed cone closest to the bottom surface of the body part is H2, H2 is larger than H1.

## Description

### [Technical Field]

The present disclosure relates to a distillation apparatus and a distillation method using the same, and more particularly, to a distillation apparatus for recovering a high-purity product through classification of volatile components from a distillation target material using thermal energy and centrifugal force, and a distillation method using the same.

### [Background Art]

A stripping column is a device that may recover high-purity products by evaporating volatile components from a liquid distillation target material using gas (vapor) in a multi-stage distillation column.

In this case, since the stripping column requires high-temperature thermal energy to recover the high-purity products from the distillation target material, it is difficult to classify and recover the high-purity product from foods, polymers, and the like that are vulnerable to heat.

A spinning cone column (SSC) uses mechanical energy of centrifugal force in addition to thermal energy, and the related prior art is disclosed in Japanese Patent Publication No. 1995-022646.

The SSC recovers the high-purity products from the distillation target material using centrifugal mechanical energy through the distillation target material introduced from the upper portion and gas (vapor) introduced from the lower portion, thereby reducing a contact time between the distillation target material and thermal energy and recovering the high-purity products at a lower temperature than the stripping column.

However, when a material to be stripped is in the form of polyvinyl chloride (PVC) slurry or latex, heat or kinetic energy may destruct latex colloidal stability to cause the material to be stripped to be coagulated or form a foam, which develops on a scale, and thus, may deteriorate the purity and physical properties of the products.

### [Disclosure]

### [Technical Problem]

An object of the present disclosure is to provide a distillation apparatus having a structure for improving latex stability and a distillation method using the same.

Another object of the present disclosure is to provide a distillation apparatus having a structure that facilitates maintenance and a distillation method using the same.

### [Technical Solution]

In one general aspect, a distillation apparatus includes: a body part into which a distillation target material is introduced from an upper portion and gas is introduced from a lower portion; a rotating shaft rotating inside the body part; a plurality of rotation cones provided on an outer surface of the rotation shaft; and a plurality of fixed cones provided on an inner surface of the body part and spaced apart from each of the rotation cones by a predetermined distance, in which, when a distance between each of the plurality of fixed cones is H1, and a shorter distance of a distance from a bottom surface of the body part to a lower surface of the rotation cone closest to the bottom surface of the body part and a distance from the bottom surface of the body part to a lower surface of the fixed cone closest to the bottom surface of the body part is H2, H2 is larger than H1.

A ratio range of the H2 to the H1 may be 3 or more and 6 or less.

A certain region of an upper end portion of each of the plurality of rotation cones may be in a form of a flat surface.

The distillation target material may be a polymer prepared through suspension polymerization or emulsion polymerization.

The body part may be provided with a handhole or a manhole for maintenance.

The handhole or the manhole may be provided between the respective fixed cones.

In another general aspect, a distillation method using a distillation apparatus including a body part into which a distillation target material is introduced from an upper portion and gas is introduced from a lower portion; a rotating shaft rotating inside the body part; a plurality of rotation cones provided on an outer surface of the rotation shaft; and a plurality of fixed cones provided on an inner surface of the body part and spaced apart from each of the rotation cones by a predetermined distance, the distillation method including: a) introducing the distillation target material from a distillation target material inlet provided on an upper side of the body part and introducing the gas from a gas inlet provided on a lower side of the body part; b) reacting the gas with the distillation target material in the body part to separate volatile materials from the distillation target material; and c) recovering the distillation target material from which the volatile material is separated in a recovery unit provided on the lower side of the body part, in which, when a distance between each of the plurality of fixed cones is H1, and a shorter distance of a distance from a bottom surface of the body part to a lower surface of the rotation cone closest to the bottom surface of the body part and a distance from the bottom surface of the body part to a lower surface of the fixed cone closest to the bottom surface of the body part is H2, H2 is larger than H1, and in the b), when the distillation target material and the gas are in contact to react, a temperature of the gas is equal to or lower than a glass transition temperature (Tg) of the distillation target material.

A ratio range of the H2 to the H1 may be 3 or more and 6 or less.

A certain region of an upper end portion of each of the plurality of rotation cones may be in a form of a flat surface.

The distillation target material may be a polymer prepared through suspension polymerization or emulsion polymerization.

The body part may be provided with a handhole or a manhole for maintenance.

The handhole or the manhole may be provided between the respective fixed cones.

### [Advantageous Effects]

The distillation apparatus and the distillation method according to the present disclosure may maintain latex stability by the distillation apparatus having a structure that greatly secures a lower space of a body part.

In addition, the distillation apparatus and the distillation method according to the present disclosure may facilitate maintenance by including a manhole or a handhole for maintenance between the respective fixed cones of the distillation apparatus.

### [BRIEF DESCRIPTION OF THE DRAWINGS]

FIG. 1 is a diagram illustrating a distillation apparatus according to an embodiment of the present disclosure.
FIG. 2 is an enlarged view illustrating portion A of FIG. 1.
FIG. 3 is a diagram illustrating test results for Comparative Example 1 and Example 1.
FIG. 4 is a diagram illustrating a distillation apparatus according to another embodiment of the present disclosure.

### [Best Mode]

Hereinafter, a distillation apparatus according to the present disclosure will be described in detail with reference to the accompanying drawings. The accompanying drawings are provided by way of example in order to sufficiently transfer the spirit of the present disclosure to those skilled in the art, and the present disclosure is not limited to the accompanying drawing provided below, but may be implemented in another form.

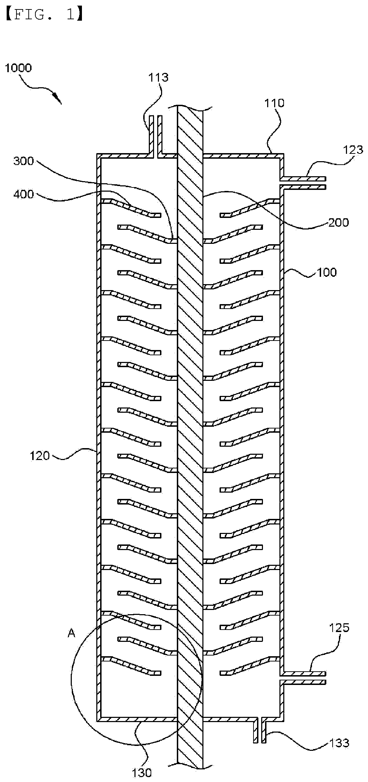

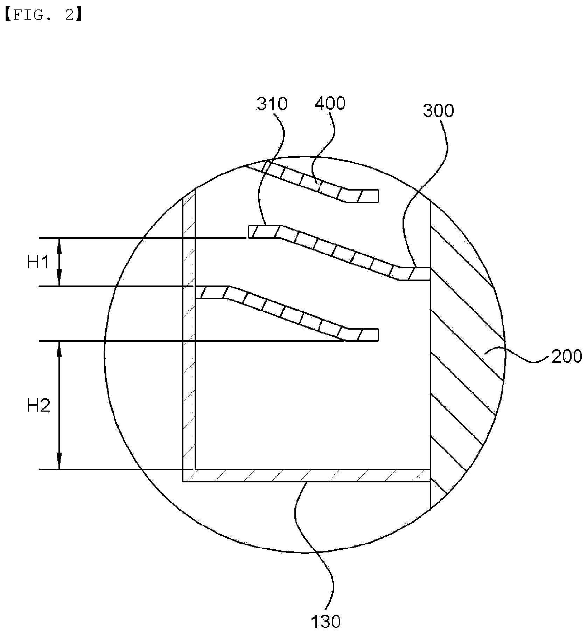

FIG. 1 is a diagram illustrating a distillation apparatus according to an embodiment of the present disclosure, and FIG. 2 is an enlarged view of portion A of FIG. 1.

Referring to FIG. 1, a distillation apparatus 1000 according to an embodiment of the present disclosure includes a body part 100, a rotating shaft 200, a rotation cone 300, and a fixed cone 400.

The body part 100 is a configuration accommodating the rotating shaft 200, the rotation cone 300 and the fixed cone 400, and a distillation target material is introduced from an upper portion of the body part 100 and gas (or vapor) is introduced from a lower portion of the body part 100.

More specifically, the body part 100 includes an upper plate 110, a side plate 120, and a lower plate 130, in which the side plate 120 forms a tubular shape and connects the upper plate 110 and the lower plate 130.

The body part 100 includes a distillation target material inlet 123 that is provided on an upper side of the side plate 120 and is introduced with a distillation target material so that the distillation target material may be introduced from the upper portion and moved downward by gravity.

The distillation target material may be a polymer prepared through suspension polymerization or emulsion polymerization.

Examples of the polymer prepared by the suspension polymerization process may include poly (vinyl chloride) (PVC), poly (methyl methacrylate) (PMMA), polytetrafluoroethylene (PTFE), polystyrene (PS), and the like.

Examples of the polymer prepared by the emulsion polymerization process may include poly (vinyl chloride) (PVC), poly(methyl methacrylate) (PMMA), polytetrafluoroetylene (PTFE), poly (vinyl alcohol) (PVA), etc.

In an embodiment of the present disclosure, PVC is described as an example of a distillation target material, but is not limited thereto. When the distillation target material is PVC, the distillation target material is in the form of PVC slurry or latex, and contains 10 to 60 wt% of PVC solid particles through suspension, micro-suspension, emulsion polymerization, and the like. In this case, PVC may be a single monomer product or a copolymer product.

In addition, the body part 100 includes a gas inlet 125 that is provided on the lower side of the side plate 120 and is introduced with gas so that the gas may rise from the lower portion to the upper portion in the opposite direction to the inflow direction of the distillation target material and into which the gas is introduced.

In addition, a gas outlet 113 is provided on one side of the upper plate 110 so that the residual gas may be discharged to the outside, and a recovery unit 133 for recovering high-purity products in which volatile materials are classified from the distillation target material is provided on one side of the lower plate 130.

However, the distillation target material inlet 123, the gas inlet 125, the gas outlet 113, and the recovery unit 133 may be arranged in various ways to meet the functional purpose, and therefore are not limited to the above-described arrangement structure.

The rotating shaft 200 is disposed inside the body part 100 in an up-down direction, and may rotate.

In this case, although not illustrated in FIG. 1, a rotating shaft control unit for supplying rotational power to the rotating shaft 200 may be provided in the body part 100.

Meanwhile, the rotation cone 300 is a configuration provided on an outer surface of the rotating shaft 200.

More specifically, the rotation cone 300 has a conical shape formed along a circumference of the outer surface of the rotating shaft 200, and has a form in which a diameter increases toward the upper end portion of the rotation cone 300 (in the direction of the upper portion of the body part 100). A plurality of rotation cones 300 may be provided and may rotate together with the rotating shaft 200 around the rotating shaft 200.

In this case, referring to FIG. 2, a certain region 310 of the upper end portion of the rotation cone 300 may have a flat surface shape.

Here, the certain region 310 of the upper end portion of the rotation cone 300 means a certain region of an edge that does not come into contact with the rotating shaft 200.

In the conventional distillation apparatus, the upper end portion of the rotation cone 300 extends in the form of an inclined surface with a constant inclination to the edge of the end. In this case, as the distillation target material spreads to the upper end portion of the rotation cone 300 by centrifugal force, greatly affected by a shear force at the end of the upper end portion of the rotation cone 300, and latex stability is destructed.

Therefore, as in an embodiment of the present disclosure, the certain region 310 of the upper end portion of the rotation cone 300 is formed into a flat surface shape to remove the inclined surface of the end of the upper end portion of the rotation cone 300, so the latex stability may increase from the excess rotational kinetic energy.

Next, the fixed cone 400 is a configuration provided on the inner surface of the body part 100 and is formed in a conical shape along the circumference of the inner surface of the body part 100.

More specifically, the fixed cone 400 is provided along the circumference of the inner surface of the side plate 120 of the body part 100 and may be provided in plurality. Similar to the rotation cone 300, the fixed cone 400 has a shape in which the diameter increases toward the upper end portion of the fixed cone 400 (in the direction of the upper portion of the body part 100) and is fixed to the inner surface of the side plate 120 without rotating.

Meanwhile, the fixed cone 400 is spaced apart from the rotation cone 300 by a predetermined distance. More specifically, one fixed cone 400 is disposed on the upper side of the upper portion of the rotation cone 300 while being spaced apart by a predetermined distance, and another fixed cone 400 is disposed on the lower side of the lower surface of the rotation cone 300 while being spaced apart by a predetermined distance. That is, the fixed cone 400 and the rotation cone 300 are alternately disposed in the up-down direction.

Here, the fixed cone 400 serves to guide the distillation target material dropping from the upper surface of the rotation cone 300 disposed above itself to the upper surface of the rotation cone 300 disposed below itself. In this case, the upper surface of the fixed cone 400 has an inclination toward the lower portion of the body part 100, and since the upper surface of the fixed cone 400 has such an inclination, the distillation target material dropping from the upper rotation cone 300 of the fixed cone 400 may move to the lower rotation cone 300 of the fixed cone 400 along the inclination of the fixed cone 400.

A distillation process using a distillation apparatus 1000 according to an embodiment of the present disclosure proceeds as follows.

When the distillation target material is introduced from the distillation target material inlet 123, the distillation target material drops to the rotation cone 300. In this case, since the rotation cone 300 is rotating, the distillation target material spreads to the far edge from the rotating shaft 200 along the upper surface of the rotation cone 300 by the centrifugal force. The distillation target material spread by the centrifugal force drops to the fixed cone 400 disposed on the lower side of the rotation cone 300, slides along the inclination of the upper surface of the fixed cone 400, and then drops to the rotation cone 300 disposed on the lower side of the fixed cone 400. In this process, the distillation target material reacts with gas introduced from the gas inlet 125 and rising so that volatile materials are seperated, and moves to the lowermost end portion of the body part 100 and is recovered by the recovery unit 133.

Meanwhile, the introduction of the gas to react with the distillation target material in the gas inlet (125) provided in the lower portion of the distillation apparatus has been described above. In this case, since a high-temperature gas is injected compared to the operating temperature, when the latex and the high-temperature gas locally contact in the lower portion of the distillation apparatus, the stability of the latex may be destructed.

Therefore, in the distillation apparatus 1000 according to the embodiment of the present disclosure, the distance from the bottom surface inside the body part to the rotation cone or the fixed cone further increases compared to the distance between the respective fixed cones 400, so the structure is changed so that the lower space of the body part 100 may be secured significantly. That is, the high-temperature gas undergoes heat exchange to some extent by the internal temperature of the body part 100, and then, comes into contact with the latex.

That is, referring to FIG. 2, H2 has a larger value than H1, where H1 is a short distance between the fixed cones 400, and H2 is the lower space of the distillation apparatus, and may be defined as a shorter distance of a distance from the bottom surface of the body part 100 to the lower surface of the rotation cone closest to the bottom surface of the body part 100 and a distance from the bottom surface of the body part 100 to the lower surface of the fixed cone closest to the bottom surface of the body part 100.

More specifically, H2/H1 > 1, and preferably, the ratio range (H2/H1) of H2 to H1 is 3 or more and 6 or less.

In the conventional distillation apparatus, the lower space H2 of the space as much as the short interval H1 between the fixed cones is provided. In this case, the lower space occupies about 10% of the total height of the distillation apparatus, which is a height corresponding to the short interval H1.

When the superheated gas comes into contact with the distillation target material, for example, PVC, which has moved to the lower portion as the temperature is reduced through heat exchange in the lower space inside the body part 100, the destruction of the latex stability may be prevented when the temperature of the gas is reduced to the glass transition temperature (Tg) or lower of PVC. In order for the temperature of the gas to decrease to the temperature lower than the glass transition temperature (Tg) of the PVC through the heat exchange, the lower space H2 should be secured at least three times the short distance H1, which corresponds to about 30% of the total height of the distillation apparatus.

However, when the lower space H2, which is more than 6 times the short distance H1, is provided (which corresponds to about 60% of the total height of the distillation apparatus), since the gas has already reached the internal temperature condition of the distillation apparatus, increasing the lower space H2 is no longer effective, but rather, the distillation efficiency is reduced due to insufficient space, in which the rotation cone 300 and the fixed cone 400 are disposed, due to the excessively large lower space.

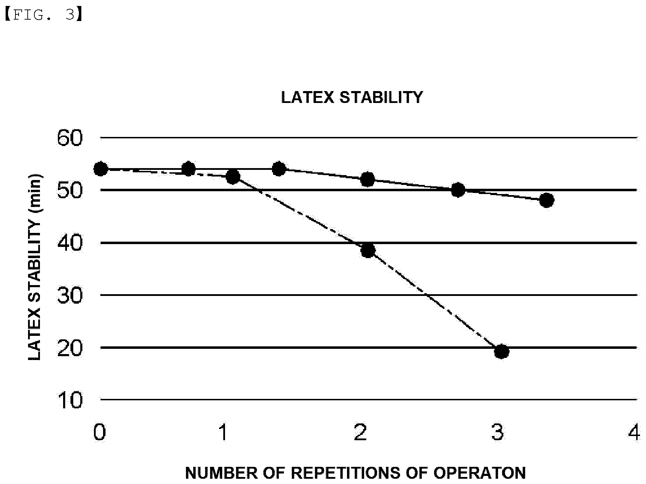

Hereinafter, test results for verifying the effect of the distillation apparatus 1000 according to an embodiment of the present disclosure will be described with reference to FIG. 3.

### (Comparative Example 1)

Stripping was performed by configuring the distillation apparatus having the lower space H2 corresponding to the short distance H1. The PVC latex in the form of emulsion was used as the distillation target material, and the heat medium used is a gas of 140°C, and the internal temperature of the distillation apparatus body part is 60°C. The repeat operation was performed to measure the latex stability retention time.

### <First Example>

Stripping was performed by configuring the distillation apparatus having the lower space H2 three times as large as the short distance H1. Similar to Comparative Example 1, the PVC latex in the form of emulsion was used as the distillation target material, and the heat medium used is a gas of 140°C, and the internal temperature of the distillation apparatus body part is 60°C. The repeat operation was performed to measure the latex stability retention time.

FIG. 3 is a diagram illustrating test results for the Comparative Example 1 and Example 1 described above.

Referring to FIG. 3, when measuring the stability retention time for each of the number of repetitions of operation under the condition that the stability of the latex of the distillation target material is maintained for about 50 minutes, as in Comparative Example 1, when only the lower space H2 corresponding to the short distance H1 of the fixed cone is provided, that is, when H1 = H2, it may be seen that as the number of repetitions of operation of the distillation apparatus increases, the retention time of the latex state is significantly reduced.

On the other hand, when the lower space H2 is greatly secured as in Example 1, the latex stability is maintained even in the repeated operation.

Here, the above-described repeated operation means repeatedly operating the process of re-injecting the distillation target material recovered by the recovery unit 133 into the distillation apparatus.

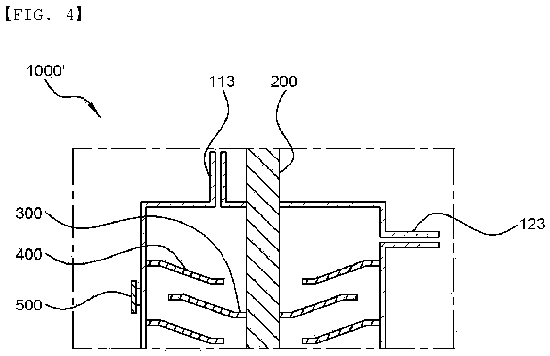

FIG. 4 is a diagram illustrating a distillation apparatus according to another embodiment of the present disclosure.

Referring to FIG. 4, a distillation apparatus 1000' according to another embodiment of the present disclosure includes a body part 100, a rotating shaft 200, a rotation cone 300, a fixed cone 400, and a manhole or handhole 500.

The distillation apparatus 1000' according to another embodiment of the present disclosure is the same as the distillation apparatus of FIG. 1 except that the distillation apparatus 1000' further includes a manhole or a hand-hole for maintenance. Since the body part 100, the rotating shaft 200, the rotation cone 300, and the fixed cone 400 are the same as the distillation apparatus 1000 according to the embodiment of the present disclosure, a detailed description thereof will be omitted.

Here, the manhole or handhole 500 is provided in the body part 100, and a person can directly enter and exit through the manhole to perform maintenance of each component of the distillation apparatus or to put his/her hand through the handhole to perform maintenance.

Preferably, the manhole or handhole may be provided between each fixed cone 400 to further facilitate maintenance.

As such, the distillation apparatus according to the present disclosure may prevent the latex from directly contacting the high-temperature gas in the lower portion of the distillation apparatus by increasing the size of the lower space of the body part compared to the short distance between the fixed cones, thereby maintaining the latex stability. In addition, the distillation apparatus according to the present disclosure may facilitate maintenance by including the manhole or handhole for maintenance between the respective fixed cones.

Hereinafter, the distillation method according to the present disclosure will be described. The distillation method according to an embodiment of the present disclosure may be performed by the distillation apparatus 1000 described above.

In this case, the distillation method according to the embodiment of the present disclosure includes: a) introducing the distillation target material from the distillation target material inlet 123 provided on the upper side of the body part 100 and introducing the gas from the gas inlet 125 provided on the lower side of the body part 100; b) reacting the gas with the distillation target material in the body part 100 to separate volatile materials from the distillation target material; and c) recovering the distillation target material from which the volatile material is separated in the recovery unit 133 provided on the lower side of the body part 100.

In this case, when the distance between each of the plurality of fixed cones 400 is H1, and a shorter distance of the distance from the bottom surface of the body part 100 to the lower surface of the rotation cone 300 closest to the bottom surface of the body part 100 and the distance from the bottom surface of the body part 100 to the lower surface of the fixed cone 400 closest to the bottom surface of the body part 100 is H2, H2 is larger than H1. Therefore, H2/H1 > 1, and preferably, the ratio range (H2/H1) of H2 to H1 is 3 or more and 6 or less.

In addition, in the step b), when the distillation target material and the gas are in contact to react, a temperature of the gas is equal to or lower than a glass transition temperature (Tg) of the distillation target material. For example, when the distillation target material is PVC, the temperature of the gas in contact with the PVC should be reduced to the glass transition temperature (Tg) or lower.

A detailed description other than the distillation method according to an embodiment of the present disclosure may be substituted for the description of the distillation apparatus 1000 described above.

As described above, although the present disclosure has been described with reference to the limited examples and drawings, the embodiments given for the purpose of explanation of the present disclosure are only one embodiment in which the present disclosure is embodied, and in order to realize the gist of the present disclosure, combinations in various forms are possible. Therefore, the present disclosure is not limited to the above embodiments, and as claimed in the following claims, without departing from the gist of the present disclosure, it will be said that the technical features of the present disclosure are possible to the extent that various modifications can be made by a person with ordinary knowledge in the field to which the disclosure pertains.

## Claims

1. A distillation apparatus, comprising:
a body part into which a distillation target material is introduced from an upper portion and gas is introduced from a lower portion;
a rotating shaft rotating inside the body part;
a plurality of rotation cones provided on an outer surface of the rotation shaft; and
a plurality of fixed cones provided on an inner surface of the body part and spaced apart from each of the rotation cones by a predetermined distance,
wherein, when a distance between each of the plurality of fixed cones is H1, and a shorter distance of a distance from a bottom surface of the body part to a lower surface of the rotation cone closest to the bottom surface of the body part and a distance from the bottom surface of the body part to a lower surface of the fixed cone closest to the bottom surface of the body part is H2, H2 is larger than H1.

2. The distillation apparatus of claim 1, wherein a ratio range of the H2 to the H1 is 3 or more and 6 or less.

3. The distillation apparatus of claim 1, wherein a certain region of an upper end portion of each of the plurality of rotation cones is in a form of a flat surface.

4. The distillation apparatus of claim 1, wherein the distillation target material is a polymer prepared through suspension polymerization or emulsion polymerization.

5. The distillation apparatus of claim 1, wherein the body part is provided with a handhole or a manhole for maintenance.

6. The distillation apparatus of claim 5, wherein the handhole or the manhole is provided between the respective fixed cones.

7. A distillation method using a distillation apparatus including a body part into which a distillation target material is introduced from an upper portion and gas is introduced from a lower portion; a rotating shaft rotating inside the body part; a plurality of rotation cones provided on an outer surface of the rotation shaft; and a plurality of fixed cones provided on an inner surface of the body part and spaced apart from each of the rotation cones by a predetermined distance, the distillation method comprising:
a) introducing the distillation target material from a distillation target material inlet provided on an upper side of the body part and introducing the gas from a gas inlet provided on the lower side of the body part;
b) reacting the gas with the distillation target material in the body part to separate volatile materials from the distillation target material; and
c) recovering the distillation target material from which the volatile material is separated in a recovery unit provided on the lower side of the body part,
wherein, when a distance between each of the plurality of fixed cones is H1, and a shorter distance of a distance from a bottom surface of the body part to a lower surface of the rotation cone closest to the bottom surface of the body part and a distance from the bottom surface of the body part to a lower surface of the fixed cone closest to the bottom surface of the body part is H2, H2 is larger than H1, and
in the b), when the distillation target material and the gas are in contact to react, a temperature of the gas is equal to or lower than a glass transition temperature (Tg) of the distillation target material.

8. The distillation method of claim 7, wherein a ratio range of the H2 to the H1 is 3 or more and 6 or less.

9. The distillation method of claim 7, wherein a certain region of an upper end portion of each of the plurality of rotation cones is in a form of a flat surface.

10. The distillation method of claim 7, wherein the distillation target material is a polymer prepared through suspension polymerization or emulsion polymerization.

11. The distillation method of claim 7, wherein the body part is provided with a handhole or a manhole for maintenance.

12. The distillation method of claim 11, wherein the handhole or the manhole is provided between the respective fixed cones.
